# EUROPÄISCHE PATENTSCHRIFT

(11) **EP 2 613 118 B1**
(45) Veröffentlichungstag und Bekanntmachung des Hinweises auf die Patenterteilung: **22.07.2015**
(21) Anmeldenummer: 13162053.6
(22) Anmeldetag: 03.12.2010
(51) Int. Cl.: F41H 7/03, B60H 1/00, F41A 9/37

(54) **Kampffahrzeug, insbesondere Panzerhaubitze**
Combat vehicle, in particular armored howitzer
Véhicule de combat, en particulier obusier blindé

(30) Priorität: 17.12.2009 DE 102009058567
(43) Veröffentlichungstag der Anmeldung: 10.07.2013
(62) Teilanmeldung aus: 10805681.3
(73) Patentinhaber: Krauss-Maffei Wegmann GmbH & Co. KG, 80997 München (DE)
(72) Erfinder: Raczek, Matthias, 34127 Kassel (DE); Heldmann, Heinrich, 34119 Kassel (DE)
(74) Vertreter: Feder Walter Ebert

(56) Entgegenhaltungen:
- EP-A1- 0 637 728
- EP-A2- 1 060 917
- DE-A1- 2 040 285
- DE-C- 977 753

## Beschreibung

Die Erfindung betrifft ein Kampffahrzeug, insbesondere eine Panzerhaubitze, mit den Merkmalen aus dem Oberbegriff von Patentanspruch 1.

Ein solches Kampffahrzeug ist beispielsweise in dem Dokument EP 1 060 917 A2 beschrieben.

Bei diesem bekannten Kampffahrzeug ist ein Luftverteilungssystem vorgesehen, bei dem die Kühlluft über eine Luftzuführungsleitung dem Besatzungsraum zugeführt wird, wobei im Besatzungsraum mindestens ein als aufblasbarer Schlauch oder aufblasbares Kissen ausgebildeter Luftverteilungsbehälter angeordnet ist, der eine Lufteintrittsöffnung sowie eine Vielzahl von in den Besatzungsraum gerichtete als Schlitze ausgebildete Luftaustrittsöffnungen aufweist.

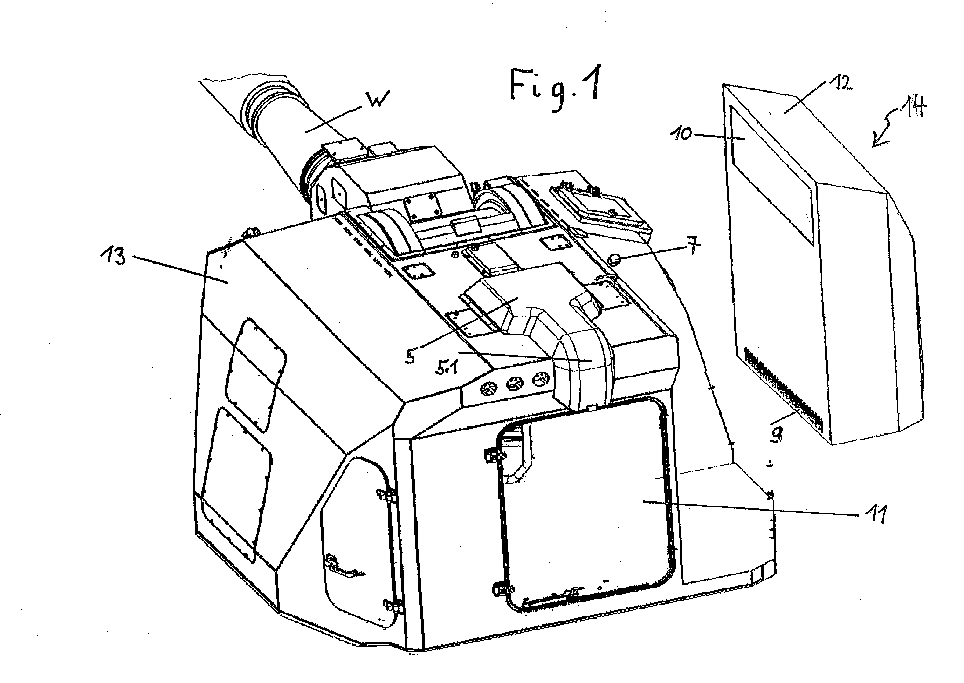

Bei dem im Dokument dargestellten Ausführungsbeispiel ist das die Kühlluft erzeugende Gebläse im Elektronikraum des Kampfpanzerturms angeordnet und der Luftverteilungsbehälter ist an der Decke des Besatzungsraums lösbar befestigt. Wie Fig. 1 des Dokuments zu entnehmen, kann die austretende Luft entlang der Seitenwände des Besatzungsraums nach unten strömen. Eine besondere Abluftöffnung ist nicht beschrieben.

In dem Dokument DE 977 753 C ist eine Belüftung von Panzertürmen und - fahrzeugen beschreiben, bei der die von außen kommende Kühlluft mittels eines unter der Decke des Besatzungsraums angeordneten Gebläses in den gesamten Besatzungsraum des Fahrzeugs in Längsrichtung hineingeführt wird und an der in Querrichtung verlaufenden hinteren Abschlusswand des Besatzungsraums nach unten abgelenkt wird. Die Kühlluft strömt in Längsrichtung im Besatzungsraum nach vorne, wird im Bereich des Vorderteils durch die Frontwand nach oben abgelenkt, in den Turm hineingeführt und durch eine Abluftöffnung in der Dachplatte des Turms nach außen geführt. Es wird somit die gesamte Panzerwanne mit Luft ausgespült.

Der Erfindung liegt die Aufgabe zugrunde ein Kampffahrzeug mit den Merkmalen aus dem Oberbegriff des Anspruchs 1 so auszubilden, dass die Kühlung des Kampfraumgehäuses mit einer möglichst geringen Kühlleistung erreichbar ist. Die Lösung dieser Aufgabe geschieht mit den Merkmalen von Patentanspruch 1. Vorteilhafte Weiterbildungen der Erfindung sind in den abhängigen Ansprüchen beschrieben.

Die Abluftöffnung kann in einer auf dem Kampfraumgehäuse angeordneten, insbesondere ballistisch geschützten Ablufteinrichtung angeordnet sein. In der Ablufteinrichtung kann ein Axiallüfter angeordnet sein, so dass die Kühlluft aktiv aus dem Kampfraum herausgeführt wird. Die Ablufteinrichtung kann ferner ein auf dem Dach des Kampfraumgehäuses geführtes und am Außenrand des Daches nach unten abgebogenes Abluftrohr aufweisen. Besonders bevorzugt sind in diesem Abluftrohr Filter und/oder Strömungshindernisse wie Schikanen angeordnet. Diese dienen zur Vermeidung, dass ggf. kontaminierte Umgebungsluft in einfacher bzw. ungefilterter Weise in den Kampfraum gelangen kann.

Besonders bevorzugt wird die Kühlluft in beide Seitenbereiche eingeleitet, so dass diese in beiden Seitenbereichen des Kampfraumes nach unten führbar ist. Durch die Erfindung wird durch gezielte Kühlung der Vorteil erreicht, dass die Temperatur im Kampfraum einen zulässigen Höchstwert nicht überschreitet. Ein weiterer Vorteil besteht darin, im Kampfraum durch eine möglichst optimale Anordnung der Luftaustrittsöffnung für Kühlluft und eine geschickte Führung der den Kampfraum durchströmenden Kühlluft zu erreichen, dass das oben genannte Ziel einer möglichst geringen Kühlleistung erreicht wird.

Im Folgenden wird anhand der beigefügten Figuren 1 bis 7 ein Ausführungsbeispiel für die Erfindung näher erläutert.

In den Zeichnungen zeigen:
- Fig. 1: in einer perspektivischen teilweise explodierten Darstellung ein Schießmodul mit einem an das Schießmodul ansetzbaren Treibladungsmagazin;
- Fig. 2: einen vertikalen Querschnitt durch den Kampfraum des Schießmoduls nach Fig. 1;
- Fig. 3: in perspektivischer Darstellung das an das Schießmodul nach Fig. 1 und Fig. 2 ansetzbare Treibladungsmagazin;
- Fig. 4: einen vertikalen Querschnitt durch das Treibladungsmagazin nach Fig. 3;
- Fig. 5: einen vertikalen in Längsrichtung verlaufenden Teilschnitt durch das Schießmodul nach Fig. 1;
- Fig. 6: das Kühlluftverteilungssystem aus Fig. 2; und
- Fig. 7: das Kühlluftverteilungssystem nach Fig. 6 in einer gedrehten Perspektive.

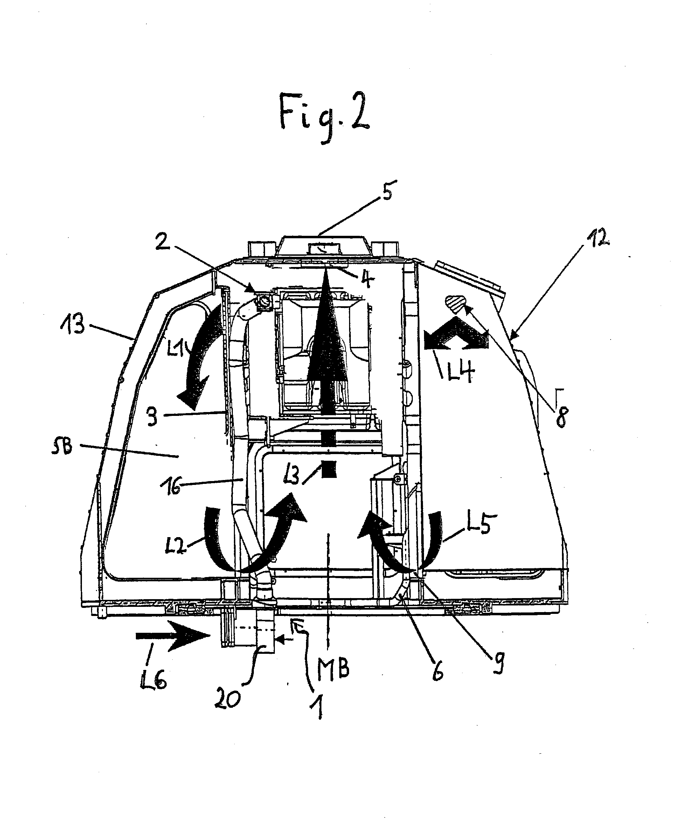

Das in den Figuren 1 und 2 dargestellte kampfraumbildende Schießmodul, das als Turm einer im Übrigen nicht dargestellten Panzerhaubitze ausgebildet sein kann, besitzt ein gepanzertes Kampfraumgehäuse 13, in dem eine schwere Waffe W in Elevation schwenkbar sowie ein Munitionsmagazin angeordnet ist. Im Inneren des Kampfraumgehäuses 13 befindet sich der Kampfraum, der über eine Einstiegstür 11 am Heck des Gehäuses 13 zugänglich ist. An der Außenseite des Kampfraumgehäuses 13 ist an einer Außenwand die innerhalb eines zurückspringenden Bereichs der Kontur des Gehäuses 13 angeordnet ist, ein Treibladungsmagazin 14 mit einem Magazingehäuse 12 anordbar.

Die in dem als Treibladungskassette ausgestalteten Treibladungsmagazin 14 angeordneten Treibladungen 15 können durch nicht dargestellte Zuführungsvorrichtungen aus dem Treibladungsmagazin 14 über eine Öffnung 10 in der dem Gehäuse 13 zugewandten Wand des Magazingehäuses 12 in den Kampfraum befördert und der Waffe W zugeführt werden.

Das Treibladungsmagazin entspricht somit im Wesentlichen dem Treibladungsmagazin aus der DE 10 2004 025 743 A1, wobei die dort beschrieben Ausgestaltung hiermit vollumfänglich in die vorliegende Anmeldung einbezogen wird.

Zusätzlich zu dem in der DE 10 2004 025 743 A1 beschriebenen Treibladungsmagazin ist das Treibladungsmagazin 14 kühlbar. Es weist hierzu einen Kühlluftanschluss 17, eine Vorrichtung 8 zur Abgabe und Verteilung der Kühlluft sowie Luftaustrittsöffnungen 9 auf.

Das Treibladungsmagazin 14 ist an das Kühlluftsystem 1 des Kampfraums anschließbar. Am Magazingehäuse 12 ist hierzu in der oberen Hälfte ein Kühlluftanschluss 17 seitlich angeordnet, der als Stutzen oder einfach als Öffnung, wie eine Bohrung, ausgestaltet sein kann. Über den Kühlluftanschluss 17 wird die Kühlluft zu einer innerhalb des Magazingehäuses 12 angeordneten Vorrichtung 8 zur Abgabe und Verteilung von Kühlluft geleitet, die die Kühlluft innerhalb des Magazingehäuses 12 verteilt und abgibt.

In dem Magazingehäuse 12 ist ein Temperatursensor 27 angeordnet, durch den die Temperatur im Gehäuse 12 ermittelbar ist. Die Temperatur kann einer Regeleinrichtung zugeführt werden, so dass die Temperatur im Gehäuse 12 auf einen vorgegebenen Wert geregelt werden kann. Die Temperatur kann auch mit einem Temperatursensor 28 gemessen werden, der unmittelbar an einer Treibladung 15 angeordnet ist.

In einem Feuerleitrechner kann dann unter Berücksichtigung der Temperatur der Treibladung 15 eine Feuerleitlösung ermittelt werden. Die entsprechenden Zusammenhänge zwischen Temperatur der Treibladung 15 und der Feuerleitlösung insbesondere der Schussweite sind im Feuerleitrechner hinterlegt.

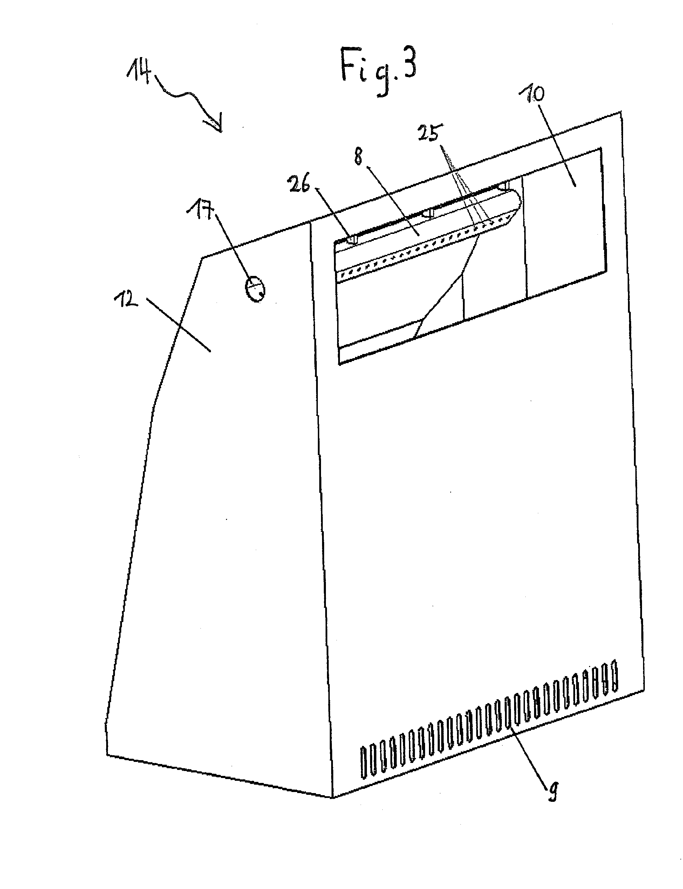

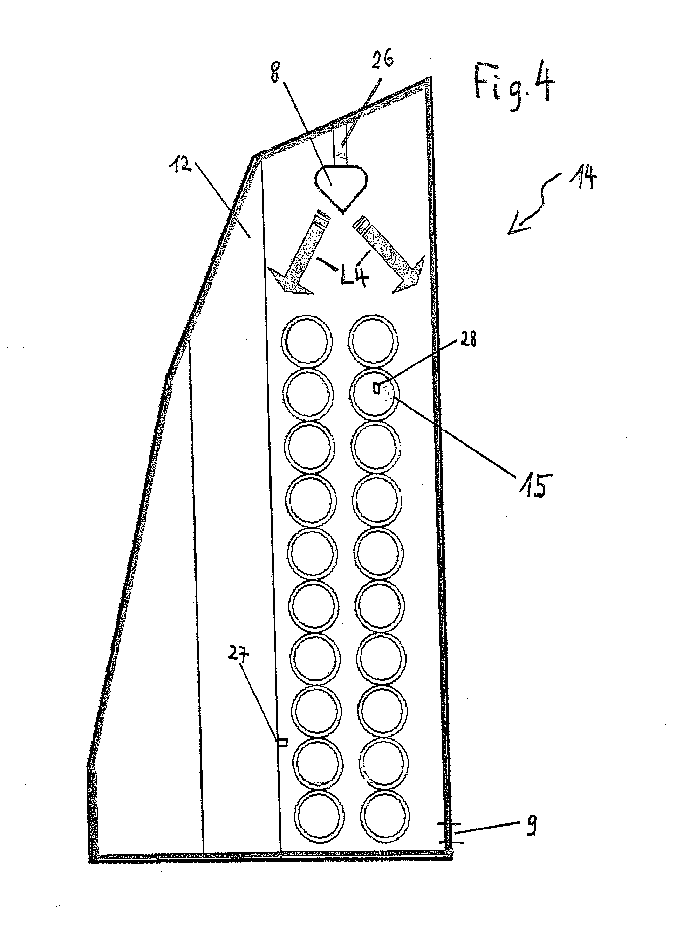

Die an den Kühlluftanschluss 17 angeschlossene Vorrichtung 8 erstreckt sich gemäß Fig. 3 im Wesentlichen über die gesamte Länge des Magazins, so dass die Kühlluft gut im Magazingehäuse 12 verteilen werden kann. Die Vorrichtung 8 weist mehrere Luftaustrittsöffnungen 25 zur Abgabe der Kühlluft auf, die insbesondere einen radialen Luftaustritt innerhalb des Magazingehäuses 12 ermöglichen. Insofern kann die Vorrichtung 8 als Radialverteiler ausgestaltet sein. Die Vorrichtung 8 weist an zwei gegenüberliegenden Seiten Luftaustrittsöffnungen 25 auf, so dass die Kühlluft in mehreren, insbesondere rechtwinklig zueinander stehenden, Richtungen L4 abgegeben werden kann (Fig. 4). Sie ist innerhalb des Treibladungsmagazins 14 an der Deckenwand des Magazingehäuses 12 befestigt.

Die Vorrichtung 8 in Form des gezeigten Radialverteilers ist nicht zwingend notwendig. Eine einfache Vorrichtung zur Abgabe von Kühlluft würde auch durch eine Öffnung im Magazingehäuse 12 erreicht werden, die an ein Kühlluftsystem anschließbar ist und über die Kühlluft in das Treibladungsmagazin 14 abgegeben werden kann.

Die von der Vorrichtung 8 abgegebene Kühlluft strömt in Pfeilrichtung L4 nach unten über die Treibladungen 15 hinweg und tritt über ein Gitter mit Austrittsöffnungen 9 im Bodenbereich des Magazingehäuses 12 aus. Dabei sind die Austrittsöffnungen 9 in der gleichen Seitenwand angeordnet wie die Öffnungen 10, d.h. in einer dem Kampfraum des Kampfraumgehäuses 13 zugewandten Seitenwand. Die Austrittsöffnungen 9 liegen in einer Seitenwand des Magazingehäuses, die rechtwinklig zu der Seitenwand mit dem Kühlluftanschluss 17 liegt.

Der Kühlluftanschluss 17 der Vorrichtung 8 zur Abgabe und Verteilung der Kühlluft ist an eine Luftzuführungsleitung 6 eines Kühlluftverteilungssystems 1 des Kampfraumes 13 angeschlossen. Am Ende der Luftzuführungsleitung 6 liegt eine Öffnung 7, welcher dem Kühlluftanschluss 17 gegenüberliegt. Über diese Kupplung kann die Kühlluft aus dem Kampfraum in das Magazingehäuse 12 hineingeführt werden.

Es ist möglich, die Kühlluftleitung zu den Treibladungen aus zwei Leitungsabschnitten aufzubauen. Ein erster Leitungsabschnitt 6 ist durch das Kampfraumgehäuse 13 geführt, während ein zweiter Leitungsabschnitt 8 durch das Magazingehäuse 12 geführt ist. Zwischen den Leitungsabschnitten 6 und 8 ist eine lösbare Kupplung zur Verbindung der Abschnitte angeordnet.

Die Luftzuführungsleitung 6 ist im Bodenbereich des Kampfraumgehäuses 13 an eine Hauptleitung 16 des Kühlluftsystems 1, welches Schläuche und/oder Rohre zur Luftführung umfasst, angeschlossen.

Das Kühlluftverteilungssystem 1 für den Kampfraum innerhalb des Kampfraumgehäuses 13 ist folgendermaßen aufgebaut: die Kühlluft wird aus einem nicht dargestellten Kühlaggregat, das unterhalb des Kampfraumgehäuses 13, beispielsweise in einer Fahrzeugwanne angeordnet sein kann, in Pfeilrichtung L6 in die Hauptleitung 16 hineingeführt, die sich vom Bodenbereich des Kampfraumgehäuses 13 bis in den Bereich unmittelbar unter dem Dach des Kampfraumgehäuses 13 erstreckt und dort an eine Luftaustrittsvorrichtung 2 angeschlossen ist. Die Anordnung dieser Luftaustrittsvorrichtung 2 ist derart, dass die Luft in nicht dargestellter Weise in Längsrichtung des Kampfraumes verteilt in Pfeilrichtung L1 in den in Fig. 2 linken Seitenbereich SB des Kampfraums hinein und dort mittels einer Leitfläche 3 abwärts geführt wird. Die Leitfläche 3 kann dabei als Leitblech ausgebildet sein. Sie kann aber auch Teil der Seitenwand eines im Kampfraum angeordneten Gerätes oder ein Teil der Innenauskleidung sein. Die im Seitenbereich SB abwärts geführte Luft wird dann in Pfeilrichtung L2 in den Mittenbereich MB des Kampfraumes geführt und strömt dort in Pfeilrichtung L3 nach oben zu einer Luftaustrittsöffnung 4 im Dach des Kampfraumgehäuses 13.

Wie Fig. 2 zu entnehmen, wird der Kampfraum des Kampfraumgehäuses 13 hierdurch von zwei sich im Mittenbereich MB vereinigenden Kühlluftströmen durchsetzt, von denen einer zur Kühlung des Kampfraums in den Pfeilrichtungen L1 und L2 geführt ist, während der andere zur gezielten Kühlung des Treibladungsmagazins 14 das Magazingehäuse 12 in den Pfeilrichtungen L4 und L5 durchströmt und dann in den Kampfraum eintritt und so zur Kühlung des Kampfraumes mit beiträgt.

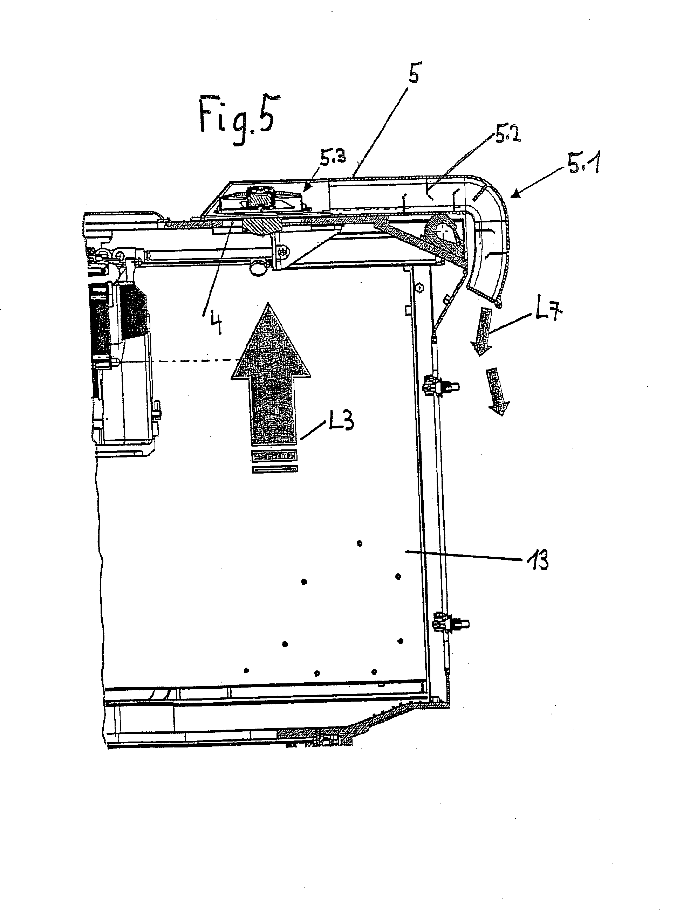

Um eine gesicherte und ballistisch geschützte Abführung der austretenden Kühlluft zu gewährleisten, ist auf dem Dach des Kampfraumgehäuses 13 über der Austrittsöffnung 4 eine Austrittseinrichtung 5 angeordnet, die wie den Fig. 1 und 5 zu entnehmen, ein ballistisch geschütztes Gehäuse mit einem zum hinteren Rand des Kampfraumgehäuses 13 geführten und dort nach unten abgebogenen Austrittsrohr 5.1 besitzt. In der Austrittsöffnung 4 ist innerhalb des Gehäuses eine Axiallüfter 5.3 angeordnet, durch den die Kühlluft aus dem Kampfraum durch die Austrittsöffnung 4 abgezogen und in das Austrittsrohr 5.1 gefördert wird. Im Austrittsrohr 5.1 sind Filterelemente 5.2 angeordnet, um das Eindringen von Staub und Schmutz in den Kampfraum zu verhindern. Die Luft tritt aus dem Austrittsrohr 5.1 in Pfeilrichtung L7 abwärts gerichtet aus.

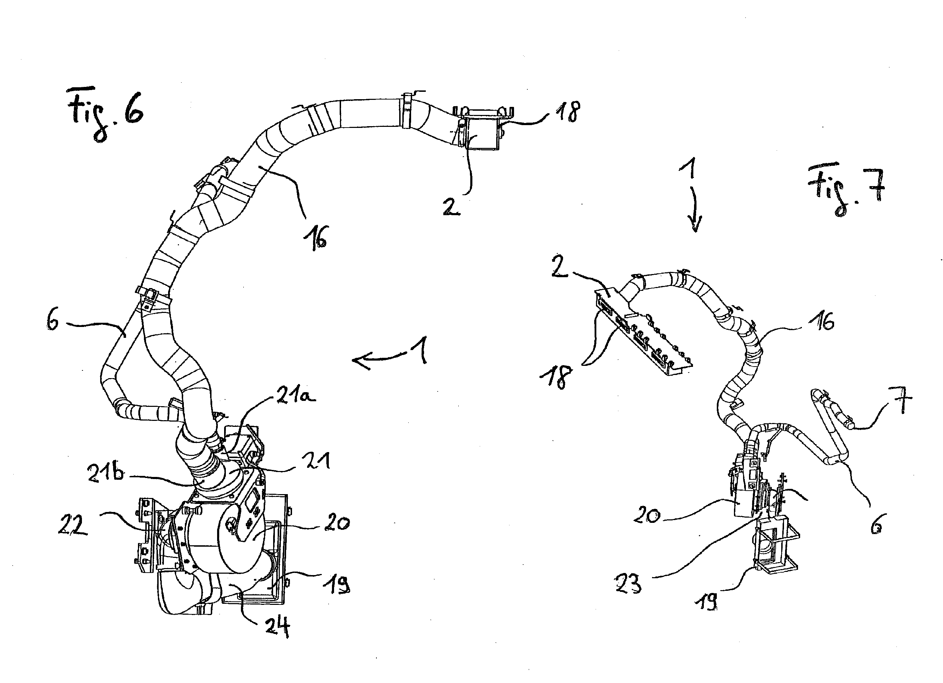

Die Figuren 6 und 7 zeigen das Kühlluftverteilungssystem 1. In der Wanne des Fahrzeugs ist ein nicht dargestellter Kühllufterzeuger angeordnet, über den ein Aufsatzelement 19 mittels Bändern aufgesetzt wird, um die Kühlluft weiterzuleiten. Von dem Aufsatzelement 19 führt ein Leitungsabschnitt 24 zu einem wannenfesten Übergabestutzen 22. In einer Indexstellung des drehbaren Geschützturmes liegt dem Übergabestutzen 22 ein luftansaugender Lüfter 20 gegenüber, der turmseitig angeordnet ist, so dass der Luftübergabestutzen 22 und der Lüfter 20 die Luftübergabestelle 23 zwischen Wanne und dem sich drehenden Kampfraum bilden.

An dem Lüfter 20 ist ein Y-Verteiler 21 angeordnet, dessen einer Ausgang 21 b zu der Hauptleitung 16 führt, die am Ende mit der Luftaustrittsvorrichtung 2 verbunden ist. Die Luftaustrittsvorrichtung 2 weist mehrere seitlich weisende Luftöffnungen 18 auf. An der zweiten Öffnung 21 a des Y-Verteilers 21 ist die Zweigleitung 6 angeordnet, die endseitig zur Öffnung 7 des Kampfraumgehäuses und somit zur kühlbaren Treibladungskassette 14 führt.

## Patentansprüche

1. Kampffahrzeug, insbesondere Panzerhaubitze, mit einem auf einer Fahrzeugwanne angeordneten drehbaren Turm, der als Kampfraumgehäuse (13) ausgebildet ist, wobei ein im Kampfraumgehäuse (13) angeordnetes Kühlluftverteilungssystem (1) eine an eine Hauptleitung (16) angeschlossene Luftaustrittsvorrichtung (2) aufweist, die in einem oberen Bereich des Kampfraumgehäuses (13) derart angeordnet ist, dass die Kühlluft in mindestens einen Seitenbereich (SB) des Kampfraumgehäuses (13) hinein führbar ist, wobei die Hauptleitung (16) vom Bodenbereich des Kampfraumgehäuses (13) bis in eine vorgegebene Höhe über dem Gehäuseboden geführt ist und der Kampfraum derart ausgestaltet ist, dass die Kühlluft im Seitenbereich des Kampfraumgehäuses (13) mittels mindestens einer Leitfläche (3) nach unten führbar ist und im Mittelbereich des Kampfraumgehäuses nach oben und über eine im oberen Mittelbereich des Kampfraumgehäuses (13) angeordnete Abluftöffnung (4) aus dem Kampfraumgehäuse (13) führbar ist.

2. Kampffahrzeug nach Anspruch 1, **dadurch gekennzeichnet, dass** die Luftaustrittsvorrichtung (2) unter dem Dach des Kampfraumgehäuses (13) angeordnet ist.

3. Kampffahrzeug nach Anspruch 1 oder 2, **dadurch gekennzeichnet, dass** die Abluftöffnung (4) in einer auf dem Kampfraumgehäuse (13) angeordneten, insbesondere ballistisch geschützten Ablufteinrichtung angeordnet ist.

4. Kampffahrzeug nach Anspruch 3, **dadurch gekennzeichnet, dass** in der Ablufteinrichtung (5) ein Axiallüfter (5.3) angeordnet ist.

5. Kampffahrzeug nach Anspruch 3 oder 4, **dadurch gekennzeichnet, dass** die Ablufteinrichtung ein auf dem Dach des Kampfraumgehäuses (13) geführtes und am Außenrand des Daches nach unten abgebogenes Abluftrohr (5.1) aufweist.

6. Kampffahrzeug nach Anspruch 5, **dadurch gekennzeichnet, dass** im Abluftrohr (5.1) Filter und/ oder Schikanen (5.2) angeordnet sind.

7. Kampffahrzeug nach einem der Ansprüche 1-6, **dadurch gekennzeichnet, dass** die Kühlluft in beiden Seitenbereichen (SB) des Kampfraumes nach unten führbar ist.

8. Kampffahrzeug nach einem der Ansprüche 1-7 **dadurch gekennzeichnet, dass** die Hauptleitung (16) an ein unterhalb des Kampfraumgehäuses (13) in der Fahrzeugwanne angeordnetes Kühlaggregat angeschlossen ist.

9. Kampffahrzeug nach Anspruch 8, **dadurch gekennzeichnet, dass** zwischen der Fahrzeugwanne und dem drehbaren Kampfraumgehäuse (13) eine Luftübergabestelle (23) angeordnet ist, mit einem in der Fahrzeugwanne angeordneten und an das Kühlaggregat angeschlossenen Luftübergabestutzen (22) und einem im Kampfraumgehäuse (13) angeordneten Luft ansaugenden Lüfter(20), wobei die Anordnung derart ist, dass in einer Indexstellung des Turms der Lüfter (20) dem Übergabestutzen (22) gegenüberliegt.

## Claims

1. Combat vehicle, in particular a howitzer, with a rotating turret arranged on a vehicle hull, constructed as a vehicle with a fighting compartment (13), whereby a cooling air circulation system (1) arranged inside the fighting compartment (13) comprises an air outlet device (2), which is connected to a main air line (16) and which is arranged in an upper part of the fighting compartment (13) in such a way that the cooling air can be conveyed into at least one side portion (SB) of the fighting compartment (13), whereby the main air line (16) extends from the floor area of the fighting compartment (13) up to a predetermined height above the floor area and the fighting compartment is designed in such a way that the cooling air in the side portion of the fighting compartment (13) can be conveyed in a downwards direction by means of at least one deflecting surface (3) while in the central area of the fighting compartment it can be conveyed in an upwards direction and extracted out of the fighting compartment (13) by an air outlet (4) arranged in the upper central area of the fighting compartment (13).

2. Combat vehicle according to Claim 1, **characterised in that** the air outlet device (2) is arranged below the roof of the fighting compartment (13).

3. Combat vehicle according to Claims 1 or 2, **characterised in that** the air outlet (4) is arranged in an air extraction system that is in particular ballistically protected and arranged on the fighting compartment (13).

4. Combat vehicle according to Claim 3, **characterised in that** an axial ventilator (5.3) is arranged in the air extraction system (5).

5. Combat vehicle according to Claims 3 or 4, **characterised in that** the air extraction system comprises an air outlet pipe (5.1), which is located on the roof of the fighting compartment (13) and which is angled downwards at the outer edge of the roof.

6. Combat vehicle according to Claim 5, **characterised in that** filters and/or bafflers (5.2) are arranged in the air outlet pipe (5.1).

7. Combat vehicle according to any of the Claims 1 to 6, **characterised in that** the cooling air can be directed in a downwards direction in both side portions (SB) of the fighting area.

8. Combat vehicle according to any of the Claims 1 to 7, **characterised in that** the main air line (16) is connected to a cooling aggregate arranged below the fighting compartment (13) in the vehicle hull.

9. Combat vehicle according to Claim 8, **characterised in that** between the vehicle hull and the rotatable fighting compartment (13) an air delivery point (23) is arranged having an air delivery nozzle (22) arranged in the vehicle hull and connected to the cooling aggregate and a sucking ventilator (20) arranged in the fighting compartment (13), whereby the arrangement is such that in an index position of the turret, the ventilator (20) lies opposite the air delivery nozzle (22).

## Revendications

1. Véhicule de combat, en particulier obusier blindé, comprenant une tourelle rotative disposée sur un châssis-coque, laquelle est réalisée sous la forme d'un compartiment de combat (13), dans lequel un système de distribution d'air frais (1) disposé dans le compartiment de combat (13) présente un dispositif de sortie d'air (2) raccordé à une conduite principale (16), lequel est disposé dans une zone supérieure du compartiment de combat (13) de telle manière que l'air frais peut être guidé à l'intérieur d'au moins une zone latérale (SB) du compartiment de combat (13), dans lequel la conduite principale (16) est guidée depuis la zone de sol du compartiment de combat (13) jusqu'à une hauteur prédéfinie au-dessus du sol de compartiment, et dans lequel le compartiment de combat est configuré de telle manière que l'air frais peut être guidé vers le bas dans la zone latérale du compartiment de combat (13) au moyen au moins d'une surface conductrice (3) et qu'il peut être guidé vers le haut dans la zone centrale du compartiment de combat et en dehors du compartiment de combat (13) par l'intermédiaire d'une ouverture d'évacuation d'air (4) disposée dans la zone centrale supérieure du compartiment de combat (13).

2. Véhicule de combat selon la revendication 1, **caractérisé en ce que** le dispositif de sortie d'air (2) est disposé sous le toit du compartiment de combat (13).

3. Véhicule de combat selon la revendication 1 ou 2, **caractérisé en ce que** l'ouverture d'évacuation d'air (4) est disposée dans un système d'évacuation d'air disposé sur le compartiment de combat (13), en particulier protégé d'un point de vue balistique.

4. Véhicule de combat selon la revendication 3, **caractérisé en ce qu'**un ventilateur axial (5.3) est disposé dans le système d'évacuation d'air (5).

5. Véhicule de combat selon la revendication 3 ou 4, **caractérisé en ce que** le système d'évacuation d'air présente un tuyau d'évacuation d'air (5.1) guidé sur le toit du compartiment de combat (13) et rabattu vers le bas au niveau du bord extérieur du toit.

6. Véhicule de combat selon la revendication 5, **caractérisé en ce que** des filtres et/ou des chicanes (5.2) sont disposés dans le tuyau d'évacuation d'air (5.1).

7. Véhicule de combat selon l'une quelconque des revendications 1 à 6, **caractérisé en ce que** l'air de refroidissement peut être guidé vers le bas dans deux zones latérales (SB) du compartiment de combat.

8. Véhicule de combat selon l'une quelconque des revendications 1 à 7, **caractérisé en ce que** la conduite principale (16) est raccordée à un groupe de refroidissement disposé dans le châssis-coque en dessous du compartiment de combat (13).

9. Véhicule de combat selon la revendication 8, **caractérisé en ce qu'**un poste de transfert d'air (23) est disposé entre le châssis-coque et le compartiment de combat (13) rotatif, lequel poste de transfert d'air est équipé d'une tubulure de transfert d'air (22) disposée dans le châssis-coque et raccordée au groupe de refroidissement et d'un ventilateur (20) aspirant de l'air, disposé dans le compartiment de combat (13), dans lequel l'agencement est tel que le ventilateur (20) fait face à la tubulure de transfert d'air (22) dans une position d'indexation de la tourelle.
